# EUROPÄISCHE PATENTSCHRIFT

(11) **EP 2 264 593 B1**
(45) Veröffentlichungstag und Bekanntmachung des Hinweises auf die Patenterteilung: **21.03.2018**
(21) Anmeldenummer: 10006170.4
(22) Anmeldetag: 15.06.2010
(51) Int. Cl.: G06F 21/51, G06F 9/45

(54) **Verfahren zur Ausführung eines Bytecodes in einer gesicherten Laufzeitumgebung**
Method for running a byte code in a secure runtime environment
Procédé d'exécution d'un code à octets dans un environnement d'exécution sécurisé

(30) Priorität: 16.06.2009 DE 102009024985
(43) Veröffentlichungstag der Anmeldung: 22.12.2010
(73) Patentinhaber: Trustonic Limited, Cambridge CB1 2JD (GB)
(72) Erfinder: Spitz, Stephan, Dr., 85747 Karlsfeld (DE); Sterzinger, Hermann, Dr., 85598 Baldham (DE)
(74) Vertreter: D Young & Co LLP

(56) Entgegenhaltungen:
- EP-A2- 0 778 522
- WO-A1-01/65366
- WO-A2-2004/012078
- US-A1- 2006 090 157
- KURT DIETRICH ET AL: "Implementation Aspects of Mobile and Embedded Trusted Computing", 6. April 2009 (2009-04-06), TRUSTED COMPUTING, SPRINGER BERLIN HEIDELBERG, BERLIN, HEIDELBERG, PAGE(S) 29 - 44, XP019115282, ISBN: 978-3-642-00586-2 * Zusammenfassung * * Seite 31, Absatz 5 * * Seite 32, Absatz 4 - Seite 34, Absatz 5; Abbildung 1 * * Seite 35, Absatz 4 - Seite 36, Absatz 2 * * Seite 39, Absatz 4 - Seite 40, Absatz 2 * * Seite 41, Absatz 2 - Seite 42, Absatz 3 *

## Beschreibung

Die Erfindung betrifft ein Verfahren zur Ausführung eines Bytecodes in einer gesicherten Laufzeitumgebung in einer Mikroprozessoreinheit, insbesondere in einem mobilen Endgerät.

Gesicherte Laufzeitumgebungen sind aus dem Stand der Technik bekannt und ermöglichen eine gegen Angriffe geschützte Ausführung von Programmen mit einer Mikroprozessoreinheit. Unter Mikroprozessoreinheit ist dabei die Gesamtheit der zur Programmausführung verwendeten Hardware zu verstehen, insbesondere der eigentliche Mikroprozessor sowie entsprechende flüchtige und nicht-flüchtige Speicher, welche bei der Programmausführung zur Ablage von Daten verwendet werden.

Aus dem Stand der Technik ist zur Hardware-unabhängigen Ausführung von Programmen insbesondere die Programmiersprache Java bekannt. Zur Generierung eines nativen Maschinencodes kann dabei beispielsweise ein sog. JIT-Compiler (JIT = Just in Time) eingesetzt werden, der Prozessorunabhängigen Bytecode während der Laufzeit des Programms in nativen Code übersetzt.

Bei der Verwendung von gesicherten Laufzeitumgebungen zur Ausführung von Bytecode erweist sich die Verwendung von JIT-Compilern als nicht praktikabel, da die direkte Ausführung dieses Compilers in der gesicherten Laufzeitumgebung viel Speicher benötigt und auch wesentlich langsamer als eine Ausführung in einer nicht gesicherten Laufzeitumgebung ist.

Der nächstliegende Stand der Technik EP 0 778 522 A2 offenbart ein Verfahren zur Ausführung eines Bytecode (Architektur neutraler Programmcode) in einer Laufzeitumgebung einer Mikroprozessoreinheit (program executing computer), bei dem durch einen Compiler außerhalb der Laufzeitumgebung eine Signatur der Laufzeitumgebung auf Gültigkeit überprüft wird; im Falle der Gültigkeit der Signatur ein mit einer Signatur der Compilers versehenes Compilat des Bytecodes durch den Compiler erzeugt wird; durch die Laufzeitumgebung die Signatur des Compilers auf Gültigkeit überprüft wird; im Falle der Gültigkeit der Signatur des Compilers die Ausführung des Compilats in der gesicherten Laufzeitumgebung erfolgt. Die Überprüfung des Compilers erfolgt erst nach der Compilierung, das Compilat wird nicht geprüft. K. Dietrich and J. Winter, Implementation Aspects ofMobile and Embedded Trusted Computing, offenbart eine gesicherte Laufzeitumgebung, z.B. ARM Trust Zone, in einem Mobiltelefon.

WO 2004/012078 A2 offenbart ein Verfahren zur Verarbeitung von Bytecode, wobei vor einer Compilierung des Bytecode ein den Bytecode begleitender Sicherheitscode (z.B. Zertifikat) verifiziert wird, um die vertrauenswürdige Herkunft des Bytecode zu verifizieren (S. 4, Z. 22 bis S. 5, Z. 6). Eine Verifizierung des Compilers vor der Compilierung ist in D3 nicht offenbart.

WO 01/65366 A1 offenbart eine gesicherte Laufzeitumgebung mit einem Cryptocompiler, bei der vor einer Programmausführung eine Prüfsumme verifiziert wird. US 2006/0090157 A1 offenbart eine Virtuelle Java Maschine mit einem Ahead-of-Time Compiler zur Compilierung von Bytecode vor der Laufzeit.

Aufgabe der Erfindung ist es, eine sichere und effiziente Ausführung von Bytecode in einer gesicherten Laufzeitumgebung zu schaffen.

Diese Aufgabe wird durch das Verfahren gemäß Patentanspruch 1 bzw. die Mikroprozessoreinheit gemäß Patentanspruch 8 gelöst. Weiterbildungen der Erfindung sind in den abhängigen Ansprüchen definiert.

In dem erfindungsgemäßen Verfahren wird zur Kompilierung des Bytecodes ein außerhalb der gesicherten Laufzeitumgebung implementierter Compiler verwendet. Um eine sichere Kompilierung zu erreichen, ist dieser Compiler mit einer entsprechenden Signatur versehen. Vor der Kompilierung wird dabei durch die gesicherte Laufzeitumgebung zumindest die Signatur dieses Compilers überprüft. Gegebenenfalls können auch noch weitere Signaturen von anderen Komponenten überprüft werden. Wird durch die gesicherte Laufzeitumgebung die Gültigkeit der überprüften Signaturen festgestellt, wird schließlich durch den Compiler aus dem Bytecode ein Compilat erzeugt, das wiederum mit einer entsprechenden Signatur versehen ist. Schließlich wird durch die gesicherte Laufzeitumgebung die Signatur des Compilats auf Gültigkeit überprüft. Sollte die Gültigkeit dieser Signatur festgestellt werden, erfolgt schließlich die Ausführung des Compilats in der gesicherten Laufzeitumgebung. Sollte demgegenüber die Überprüfung zumindest einer der oben genannten Signaturen ergeben, dass die entsprechende Signatur nicht gültig ist, wird das Verfahren beendet, ohne dass der Bytecode compiliert wird bzw. das Compilat ausgeführt wird.

Das erfindungsgemäße Verfahren zeichnet sich dadurch aus, dass anstatt einer JIT-Kompilierung eine der eigentlichen Programmausführung vorgelagerte AOT-Kompilierung (AOT = Ahead of Time) außerhalb der gesicherten Laufzeitumgebung durchgeführt wird, wodurch die Programmausführung effizienter wird, da auf eine zeitaufwändige Kompilierung innerhalb der gesicherten Laufzeitumgebung verzichtet wird. Nichtsdestotrotz ist die Programmausführung ausreichend dadurch geschützt, dass entsprechende Signaturen bei der Durchführung der Kompilierung verwendet werden, welche durch die die gesicherte Laufzeitumgebung auf Gültigkeit überprüft werden.

In einer besonders bevorzugten Variante des erfindungsgemäßen Verfahrens ist der Bytecode ein Java-Bytecode. Insbesondere handelt es sich bei diesem Bytecode um entsprechend vorkompilierte Java-Class-Dateien.

In einer weiteren, bevorzugten Variante des erfindungsgemäßen Verfahrens wird ferner der Bytecode mit einer Signatur versehen, deren Gültigkeit neben der Signatur des Compilers überprüft wird. Hierdurch wird die Sicherheit des Verfahrens erhöht. Gegebenenfalls können ferner eine oder mehrere, von dem Compiler verwendete Bibliotheken mit jeweiligen Signaturen versehen sein, welche ebenfalls überprüft werden. Hierdurch wird nochmals ein verbesserter Schutz des Verfahrens gegen Angriffe Dritter erreicht. Die im erfindungsgemäßen Verfahren verwendeten Signaturen können ferner einander entsprechen, d.h. es wird einheitlich immer die gleiche Signatur verwendet, jedoch besteht auch die Möglichkeit, dass sich die Signaturen zumindest teilweise unterscheiden.

Die gesicherte Laufzeitumgebung kann in dem erfindungsgemäßen Verfahren auf beliebige Art und Weise generiert werden. In einer bevorzugten Variante beruht die gesicherte Laufzeitumgebung auf der hinlänglich aus dem Stand der Technik bekannten ARM-Trust-Zone-Technologie. Es besteht jedoch auch die Möglichkeit, dass eine gesicherte Laufzeitumgebung durch Virtualisierung in sog. Embedded Systemen oder durch gesicherte eigenständige Prozessoren innerhalb der Mikroprozessoreinheit generiert wird.

Neben dem oben beschriebenen Verfahren betrifft die Erfindung ferner eine Mikroprozessoreinheit, welche derart ausgestaltet ist, dass jede Variante des erfindungsgemäßen Verfahrens mit der Mikroprozessoreinheit durchgeführt werden kann. Der Begriff der Mikroprozessoreinheit ist dabei wiederum weit zu verstehen und umfasst alle für die Ausführung des Bytecodes notwendigen Hardware-Komponenten einer entsprechenden Einheit, z.B. eines tragbaren Datenträgers und insbesondere einer Chipkarte.

Die Erfindung betrifft darüber hinaus ein mobiles Endgerät, insbesondere ein Mobiltelefon, welches eine entsprechende Mikroprozessoreinheit beinhaltet.

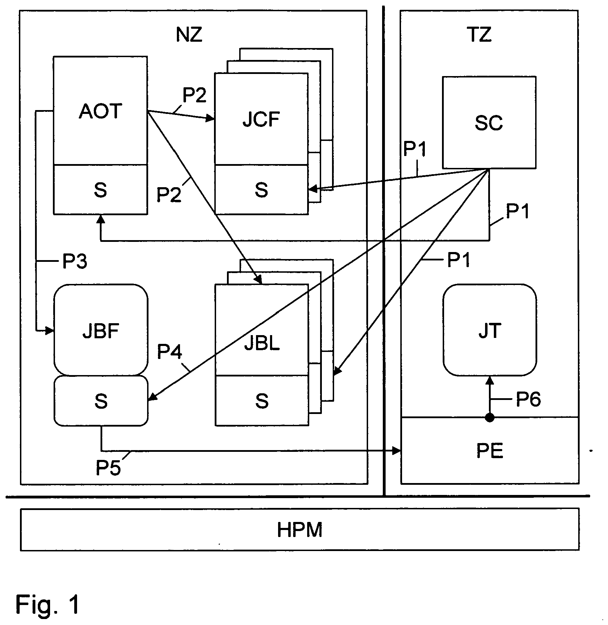

Ein Ausführungsbeispiel der Erfindung wird nachfolgend anhand der beigefügten Fig. 1 detailliert beschrieben. Diese Figur zeigt in schematischer Darstellung die Ausführung eines Java-Bytecodes basierend auf einer Variante der Erfindung.

Nachfolgend wird anhand von Fig. 1 die Ausführung von Java-Bytecode mit Hilfe einer gesicherten Laufzeitumgebung in der Form einer sog. ARM-Trust-Zone beschrieben. Bei Java-Bytecode handelt es sich um einen Prozessor-unabhängigen Objektcode, der aus Java-Quellcode vorkompiliert wurde. Die ARM-Trust-Zone stellt eine bekannte Technologie dar, mit der in einer Mikroprozessoreinheit ein geschützter Bereich generiert wird, der als gesicherte Laufzeitumgebung zur Durchführung von Applikationen verwendet wird. In der hier beschriebenen Ausführungsform ist die ARM-Trust-Zone in einer Hardware-Plattform eines mobilen Endgeräts, z.B. einem Mobiltelefon, implementiert. Die Laufzeitumgebung stellt dabei eine Softwareschicht zwischen der Applikations- und der Betriebssystem-Schicht der Mikroprozessoreinheit dar.

Fig. 1 zeigt den Aufbau der in der hier beschriebenen Ausführungsform verwendeten ARM-Technologie. Basierend auf der Hardware-Plattform HPM des mobilen Endgeräts wird ein geschützter Bereich TZ (TZ = Trust-Zone) zur Ausführung der gesicherten Laufzeitumgebung sowie ein normaler, nicht gesicherter Bereich NZ (NZ = Normal-Zone) ausgebildet. Gemäß Fig. 1 ist ein Java-Bytecode in der Form von vorkompilierten Java-Class-Dateien JCF in einer gesicherten Umgebung durchzuführen, ohne hierfür einen Bytecode-Interpreter in der Trust-Zone TZ zu verwenden, der sehr viel RAM benötigt und die Programmausführung stark verlangsamt.

Um dies zu erreichen, wird mit einem sog. AOT-Compiler AOT in der nicht gesicherten Normal-Zone NZ zunächst ein Compilat in der Form von Binärcode JBF generiert, der anschließend in der gesicherten Laufzeitumgebung der Trust-Zone TZ ausgeführt wird. AOT-Compiler sind hinlänglich ausdem Stand der Technik bekannt und übersetzen entsprechenden Programmcode vor der eigentlichen Ausführung in native Maschinensprache. Um die Kompilierung in der Normal-Zone NZ abzusichern, werden entsprechende Signaturen S verwendet. Insbesondere werden dabei die Java-Class-Dateien JCF, der Compiler AOT sowie die bei der Kompilierung verwendeten Java-Bibliotheken JBL mit einer geeigneten digitalen Signatur versehen, wobei sichergestellt ist, dass die Trust-Zone TZ die Gültigkeit dieser Signatur in geeigneter Weise überprüfen kann. Es können dabei bekannte Verfahren zur Generierung der Signatur und zur Überprüfung der Authentizität der Signatur verwendet werden. Beispielsweise kann die Signatur basierend auf einem geheimen Schlüssel in der Normal-Zone NZ erzeugt werden, wobei in der Trust-Zone TZ die Gültigkeit der Signatur basierend auf einem, dem geheimen Schlüssel zugeordneten öffentlichen Schlüssel festgestellt werden kann.

In der Ausführungsform der Fig. 1 werden dabei die gleichen Signaturen sowohl für den Compiler AOT, die Java-Class-Dateien JCF und die Java-Bibliotheken JBL verwendet. Es ist jedoch gegebenenfalls auch möglich, dass für diese Komponenten unterschiedliche Signaturen eingesetzt werden, wobei in diesem Fall in der Trust-Zone TZ auch entsprechende Informationen hinterlegt sein müssen, mit denen die unterschiedlichen Signaturen getrennt voneinander überprüft werden können. Um das Verfahren zur Ausführung des Bytecodes JCF abzusichern, werden gemäß der Ausführungsform der Fig. 1 zunächst die Signaturen S des Compilers AOT, des Bytecodes JCF und der Java-Bibliotheken JBL durch die Trust-Zone TZ auf Gültigkeit überprüft, wobei dieser Schritt durch den Block SC (SC = Signatur-Check) und die drei Pfeile P1 angedeutet ist. Die Pfeile zeigen dabei auf die entsprechenden Signaturen des Compilers bzw. der Java-Class-Dateien bzw. der Java-Bibliotheken.

Ergibt die Signatur-Überprüfung SC, dass alle Signaturen gültig sind, übersetzt der AOT-Compiler AOT schließlich den Bytecode in der Form der Java-Class-Dateien JCF in das Compilat in der Form einer Java-Binärdatei JBF. Die Kompilierung der Java-Class-Dateien unter Verwendung entsprechender Java-Bibliotheken JBL ist dabei in Fig. 1 durch entsprechende Pfeile P2 und einen Pfeil P3 angedeutet. Durch die Pfeile P2 wird zum Ausdruck gebracht, dass zur Kompilierung sowohl die Java-Class-Dateien JCF sowie entsprechende Java-Bibliotheken JBL verwendet werden. Durch den Pfeil P3 wird zum Ausdruck gebracht, dass durch die Kompilierung ein entsprechendes Compilat in der Form einer Java-Binärdatei JBF generiert wird. Dieses Compilat wird dabei wiederum mit der entsprechenden Signatur S versehen, deren Gültigkeit anschließend von der Trust-Zone TZ überprüft wird, wie durch den Pfeil P4 angedeutet ist. Wird die Gültigkeit dieser Signatur festgestellt, wird die Java-Binärdatei JBF schließlich in die Trust-Zone TZ importiert, was durch den Pfeil P5 angedeutet ist. Schließlich erfolgt in der Laufzeitumgebung der Trust-Zone TZ die Ausführung des Compilats, was durch den Block PE (PE = Program Execution) in Fig. 1 wiedergegeben wird. Dabei wird eine gesicherte Applikation in der Form eines Java-Trustlets JT erzeugt und ausgeführt (Pfeil P6).

Die soeben beschriebene Variante des erfindungsgemäßen Verfahrens zeichnet sich dadurch aus, dass Java-Bytecode in einer gesicherten Umgebung ausgeführt wird, ohne dass Ressourcen der Trust-Zone zur Kompilierung des Bytecodes verwendet werden müssen. Dies wird dadurch erreicht, dass vorab durch einen AOT-Compiler außerhalb der Trust-Zone die Kompilierung des Bytecodes durchgeführt wird. Eine geeignete Absicherung dieses Verfahrens wird dabei durch entsprechende Signaturen erreicht, welche von der Trust-Zone auf ihre Gültigkeit überprüft werden.

## Patentansprüche

1. Verfahren zur Ausführung eines Bytecodes (JCF) in einer gesicherten Laufzeitumgebung (TZ) einer Mikroprozessoreinheit (HPM), insbesondere in einem mobilen Endgerät, bei dem:
a) durch die gesicherte Laufzeitumgebung (TZ) eine oder mehrere Signaturen (S), umfassend zumindest die Signatur eines Compilers (AOT) außerhalb der gesicherten Laufzeitumgebung (TZ), auf Gültigkeit überprüft werden;
b) im Falle der Gültigkeit der Signatur oder Signaturen (S) ein mit einer Signatur (S) versehenes Compilat (JBF) aus dem Bytecode (JCF) durch den Compiler (AOT) erzeugt wird;
c) durch die gesicherte Laufzeitumgebung (TZ) die Signatur (S) des Compilats (JBF) auf Gültigkeit überprüft wird;
d) im Falle der Gültigkeit der Signatur (S) des Compilats (JBF) die Ausführung des Compilats (JBF) in der gesicherten Laufzeitumgebung (TZ) erfolgt.

2. Verfahren nach Anspruch 1, **dadurch gekennzeichnet, dass** der Bytecode (JCF) ein Java-Bytecode ist.

3. Verfahren nach einem der vorhergehenden Ansprüche, **dadurch gekennzeichnet, dass** ferner der Bytecode (JCF) mit einer Signatur (S) versehen wird, deren Gültigkeit in Schritt a) überprüft wird.

4. Verfahren nach einem der vorhergehenden Ansprüche, **dadurch gekennzeichnet, dass** ferner eine oder mehrere, von dem Compiler verwendete Bibliotheken (JBL) mit jeweiligen Signaturen (S) versehen sind, welche in Schritt a) überprüft werden.

5. Verfahren nach einem der vorhergehenden Ansprüche, **dadurch gekennzeichnet, dass** die im Verfahren verwendeten Signaturen (S) einander entsprechen oder sich zumindest teilweise voneinander unterscheiden.

6. Verfahren nach einem der vorhergehenden Ansprüche, **dadurch gekennzeichnet, dass** die gesicherte Laufzeitumgebung eine ARM-Trust-Zone ist.

7. Verfahren nach einem der vorhergehenden Ansprüche, **dadurch gekennzeichnet, dass** die gesicherte Laufzeitumgebung (TZ) in zumindest einem separaten gesicherten Prozessor der Mikroprozessoreinheit (HPM) ausgebildet ist.

8. Mikroprozessoreinheit, welche derart ausgestaltet ist, dass zur Ausführung eines Bytecodes (JCF) folgende Schritte durchgeführt werden:
a) durch eine in der Mikroprozessoreinheit (HPM) implementierte gesicherte Laufzeitumgebung (TZ) werden eine oder mehrere Signaturen (S), umfassend zumindest die Signatur (S) eines Compilers (AOT) außerhalb der gesicherten Laufzeitumgebung, auf Gültigkeit überprüft;
b) im Falle der Gültigkeit der Signatur oder Signaturen wird ein mit einer Signatur (S) versehenes Compilat (JBF) aus dem Bytecode (JCF) durch den Compiler (AOT) erzeugt;
c) durch die gesicherte Laufzeitumgebung (TZ) wird die Signatur (S) des Compilats (JBF) auf Gültigkeit überprüft;
d) im Falle der Gültigkeit der Signatur (S) des Compilats (JBF) erfolgt die Ausführung des Compilats (JBF) in der gesicherten Laufzeitumgebung (TZ).

9. Mikroprozessoreinheit nach Anspruch 8, welche derart ausgestaltet ist, dass ein Verfahren nach einem der Ansprüche 2 bis 7 mit der Mikroprozessoreinheit durchführbar ist.

10. Mobiles Endgerät, umfassend eine Mikroprozessoreinheit (HPM) nach Anspruch 8 oder 9.

## Claims

1. Method for executing a bytecode (JCF) in a secure runtime environment (TZ) of a microprocessor unit (HPM), in particular in a mobile terminal, in which:
a) one or more signatures (S), comprising at least the signature of a compiler (AOT) outside the secure runtime environment (TZ), are checked for validity by the secure runtime environment (TZ);
b) if the signature(s) (S) is/are valid, a compilation (JBF) provided with a signature (S) is generated from the bytecode (JCF) by the compiler (AOT);
c) the signature (S) of the compilation (JBF) is checked for validity by the secure runtime environment (TZ);
d) if the signature (S) of the compilation (JBF) is valid, the compilation (JBF) is executed in the secure runtime environment (TZ).

2. Method according to Claim 1, **characterized in that** the bytecode (JCF) is a Java bytecode.

3. Method according to one of the preceding claims, **characterized in that** the bytecode (JCF) is also provided with a signature (S), the validity of which is checked in step a).

4. Method according to one of the preceding claims, **characterized in that** one or more libraries (JBL) used by the compiler are also provided with respective signatures (S) which are checked in step a).

5. Method according to one of the preceding claims, **characterized in that** the signatures (S) used in the method correspond to one another or differ at least partially from one another.

6. Method according to one of the preceding claims, **characterized in that** the secure runtime environment is an ARM TrustZone.

7. Method according to one of the preceding claims, **characterized in that** the secure runtime environment (TZ) is formed in at least one separate secure processor of the microprocessor unit (HPM).

8. Microprocessor unit which is configured in such a manner that the following steps are carried out in order to execute a bytecode (JCF):
a) one or more signatures (S), comprising at least the signature (S) of a compiler (AOT) outside the secure runtime environment, are checked for validity by a secure runtime environment (TZ) implemented in the microprocessor unit (HPM);
b) if the signature(s) is/are valid, a compilation (JBF) provided with a signature (S) is generated from the bytecode (JCF) by the compiler (AOT);
c) the signature (S) of the compilation (JBF) is checked for validity by the secure runtime environment (TZ);
d) if the signature (S) of the compilation (JBF) is valid, the compilation (JBF) is executed in the secure runtime environment (TZ).

9. Microprocessor unit according to Claim 8, which is configured in such a manner that a method according to one of Claims 2 to 7 can be carried out with the microprocessor unit.

10. Mobile terminal comprising a microprocessor unit (HPM) according to Claim 8 or 9.

## Revendications

1. Procédé d'exécution d'un code d'octets (JCF) dans un environnement d'exécution sécurisé (TZ) d'une unité à microprocesseur (HPM), notamment dans un terminal mobile, dans lequel :
a) une ou plusieurs signatures (S), comprenant au moins la signature d'un compilateur (AOT), sont vérifiées du point de vue de leur validité par l'environnement d'exécution sécurisé (TZ) à l'extérieur de l'environnement d'exécution sécurisé (TZ) ;
b) dans le cas où la signature ou les signatures (S) est/sont valide(s), un résultat de compilation (JBF) doté d'une signature (S) est généré par le compilateur (AOT) à partir du code d'octets (JCF) ;
c) la signature (S) du résultat de compilation (JBF) est vérifiée du point de vue de sa validité par l'environnement d'exécution sécurisé (TZ) ;
d) dans le cas où la signature (S) du résultat de compilation (JBF) est valide, l'exécution du résultat de compilation (JBF) est effectuée dans l'environnement d'exécution sécurisé (TZ).

2. Procédé selon la revendication 1, **caractérisé en ce que** le code d'octets (JCF) est un code d'octets Java.

3. Procédé selon l'une des revendications précédentes, **caractérisé en ce que** le code d'octets (JCF) est en outre doté d'une signature (S) dont la validité est vérifiée à l'étape a).

4. Procédé selon l'une des revendications précédentes, **caractérisé en ce qu'**une ou plusieurs bibliothèques (JBL) utilisées par le compilateur sont dotées de signatures (S) respectives qui sont vérifiées à l'étape a).

5. Procédé selon l'une des revendications précédentes, **caractérisé en ce que** les signatures (S) utilisées dans le procédé se correspondent mutuellement ou diffèrent les unes des autres au moins partiellement.

6. Procédé selon l'une des revendications précédentes, **caractérisé en ce que** l'environnement d'exécution sécurisé est une zone de confiance ARM.

7. Procédé selon l'une des revendications précédentes, **caractérisé en ce que** l'environnement d'exécution sécurisé (TZ) est mis en oeuvre dans au moins un processeur sécurisé séparé de l'unité à microprocesseur (HPM).

8. Unité à microprocesseur conçue pour mettre en oeuvre les étapes suivantes afin d'exécuter un code d'octets (JCF) :
a) une ou plusieurs signatures (S), comprenant au moins la signature (S) d'un compilateur (AOT), sont vérifiées du point de vue de leur validité par l'environnement d'exécution sécurisé (TZ) mis en oeuvre dans l'unité à microprocesseur (HPM), à l'extérieur de l'environnement d'exécution sécurisé ;
b) dans le cas où la signature ou les signatures est/sont valide(s), un résultat de compilation (JBF) doté d'une signature (S) est généré par le compilateur (AOT) à partir du code d'octets (JCF) ;
c) la signature (S) du résultat de compilation (JBF) est vérifiée du point de vue de sa validité par l'environnement d'exécution sécurisé (TZ) ;
d) dans le cas où la signature (S) du résultat de compilation (JBF) est valide, l'exécution du résultat de compilation (JBF) est effectuée dans l'environnement d'exécution sécurisé (TZ).

9. Unité à microprocesseur selon la revendication 8, conçue de manière à ce qu'un procédé selon l'une des revendications 2 à 7 puisse être mis en oeuvre au moyen de l'unité à microprocesseur.

10. Terminal mobile comprenant une unité à microprocesseur (HPM) selon la revendication 8 ou 9.
